# EUROPÄISCHE PATENTSCHRIFT

(11) **EP 3 791 476 B1**
(45) Veröffentlichungstag und Bekanntmachung des Hinweises auf die Patenterteilung: **29.09.2021**
(21) Anmeldenummer: 19797238.3
(22) Anmeldetag: 29.10.2019
(51) Int. Cl.: H04B 1/3822

(54) **RUNDFUNKEMPFANGSVORRICHTUNG FÜR EIN FAHRZEUG**
RADIO RECEIVING DEVICE FOR A VEHICLE
DISPOSITIF DE RÉCEPTION RADIO POUR UN VÉHICULE

(30) Priorität: 15.11.2018 DE 102018219569
(43) Veröffentlichungstag der Anmeldung: 17.03.2021
(73) Patentinhaber: Audi AG, 85045 Ingolstadt (DE)
(72) Erfinder: CENANOVIC, Amir, 85120 Hepberg (DE); REICHARDT, Lars, 85139 Wettstetten (DE)
(86) Internationale Anmeldenummer: PCT/EP2019/079501
(87) Internationale Veröffentlichungsnummer: WO 2020/099120

(56) Entgegenhaltungen:
- JP-A- 2008 252 491
- US-A1- 2004 192 193
- US-A1- 2014 242 904
- US-A1- 2017 302 366

## Beschreibung

Die Erfindung betrifft eine Rundfunkempfangsvorrichtung für ein Fahrzeug, mit einer ersten Signalverarbeitungseinheit, welche ein MRC (Maximum Ratio Combining)-Modul zum Kombinieren einer Mehrzahl von synchronisierten analogen Zwischenfrequenzsignalen zu einem kombinierten analogen Zwischenfrequenzsignal und einen Demodulator zum Extrahieren eines Nutzsignals aus dem kombinierten analogen Zwischenfrequenzsignal umfasst. Ferner betrifft die Erfindung ein Rundfunkempfangssystem für ein Fahrzeug, ein Fahrzeug und ein Verfahren zum Empfangen eines Rundfunksignals eines stationären Rundfunksenders.

Eine Rundfunkempfangsvorrichtung der eingangs genannten Art mit einer an die Rundfunkempfangsvorrichtung angeschlossenen Rundfunkantenne dient dem Empfangen eines terrestrischen, d. h. von einem stationären Rundfunksender abgestrahlten, Rundfunksignals. DE 10 2015 012 893 A1 und EP 3 163 760 A1 beschreiben jeweils Rundfunksempfangsvorrichtungen zum Empfangen derartiger Rundfunksignale.

JP 2008 252491 A beschreibt ein weiteres Rundfunkempfangssystem für ein Fahrzeug, mit einem C2C-Modul zum Kommunizieren mit weiteren Fahrzeugen um das Empfangssignal zu verbessern.

Der stationäre Rundfunksender umfasst zumeist eine Rundfunksendevorrichtung und eine Sendeantenne, welche an die Rundfunksendevorrichtung angeschlossen ist. Unter Rundfunk versteht man gewöhnlich ein von dem stationären Rundfunksender kontinuierlich abgestrahltes und einen Audio- und/oder Videostrom übermittelndes Rundfunksignal, welches ein mittels der Rundfunkempfangsvorrichtung nutzbares Radio- oder Fernsehangebot bereitstellt.

Das Rundfunksignal umfasst ein Trägersignal mit einer bestimmten Trägerfrequenz und ein Nutzsignal, beispielsweise einen Audio- oder Videostrom, welches die Rundfunksendevorrichtung dem Trägersignal durch Modulation aufprägt. Bei einer Amplitudenmodulation (Amplitude Modulation, AM, z. B. Mittelwellenradio) moduliert das Nutzsignal die Amplitude des Trägersignals und lässt die Trägerfrequenz des Trägersignals unbeeinflusst. Bei einer Frequenzmodulation (Frequency Modulation, FM, z. B. UKW-Radio) moduliert das Nutzsignal dagegen die Frequenz des Trägersignals in einem Frequenzbereich um die Trägerfrequenz herum und lässt die Amplitude des Trägersignals unbeeinflusst. Dabei kann das Nutzsignal sowohl analog vorliegen (analoges Radio bzw. analoges Fernsehen) als auch digital kodiert sein (Digital Audio Broadcasting, DAB bzw. Digital Video Broadcasting - Terrestrial, DVB-T).

Ein empfangbarer Signalpegel des Rundfunksignals nimmt mit zunehmender Entfernung von dem stationären Rundfunksender ab. Die Abnahme der Signalstärke ist im Wesentlichen eine unvermeidliche Folge der Energieerhaltung. Sie kann durch eine Abschattung, beispielsweise in einem engen Tal, in einer engen Häuserschlucht einer Stadt oder in einem Tunnel, oder im Falle alternativer Propagationspfade durch eine destruktive, d. h. negative überlagende oder auslöschende, Interferenz aber weiter verstärkt werden. Infolgedessen besitzt der Rundfunksender eine durch eine Sendeleistung und äußere Gegebenheiten bestimmte endliche Reichweite. Ein schwaches Rundfunksignal, d. h. ein Rundfunksignal mit einem geringen Signalpegel, geht mit einem kleinen Signal-Rausch-Verhältnis (Signal Noise Ratio, SNR) einher.

Eine Rundfunkempfangsvorrichtung, welche in einem sogenannten Funkloch, d. h. einem abgeschatteten Bereich oder einem Bereich mit einer destruktiven Interferenz des Rundfunksignals und/oder in einem etwa der Reichweite entsprechenden Abstand zu dem stationären Rundfunksender angeordnet ist, kann wegen des dort herrschenden kleinen SNR das Nutzsignal nicht in einer ausreichenden Qualität bereitstellen. Infolgedessen kann es zu einem starken Rauschen und/oder zu Unterbrechungen des Nutzsignals, d. h. Aussetzern, kommen, was unerwünscht ist.

Mobile Rundfunkempfangsvorrichtungen, welche sich relativ zu einem stationären Rundfunksender bewegen und während des Bewegens zum einen wiederholt in Funklöcher und zum anderen innerhalb von Reichweiten wechselnder stationärer Rundfunksender gelangen, leiden unter den beschriebenen Qualitätsproblemen in besonderer Weise. Dazu gehören insbesondere Rundfunkempfangsvorrichtungen, welche in Fahrzeugen verbaut sind und gewöhnlich kurz als Autoradios bezeichnet werden. Entsprechend wird angestrebt, eine Empfangsqualität einer Rundfunkempfangsvorrichtung für ein Fahrzeug dahingehend zu verbessern, dass sie auch bei einem schwachen Rundfunksignal ein Nutzsignal in einer zufriedenstellenden Qualität bereitstellen.

Die Empfangsqualität einer Rundfunkempfangsvorrichtung lässt sich dadurch verbessern, dass sie mehrere Rundfunksignale des stationären Rundfunksenders, welche von mehreren an die Rundfunkempfangsvorrichtung angeschlossenen und zueinander beabstandeten Rundfunkantennen empfangen und bereitgestellt werden, miteinander kombiniert. Die mehreren Rundfunkantennen bilden dabei einen Antennenverbund, der auch als Antennenarray bezeichnet wird. Der Antennenverbund nutzt die Raumdiversität des Rundfunksignals, indem die Wahrscheinlichkeit erhöht ist, dass zumindest eine der mehreren Rundfunkantennen ein Rundfunksignal mit einem akzeptablen SNR empfängt. Wenn die Rundfunkempfangsvorrichtung die mehreren Rundfunksignale auf geschickte Weise miteinander kombiniert, ist das SNR des kombinierten Rundfunksignals insgesamt vergrößert.

Ein vorteilhaftes Kombinationsverfahren ist das MRC-Verfahren (Maximum Ratio Combining). DE 10 2017 203 993 A1 offenbart ein Rundfunkempfangssystem, welches zum Vergrößern des SNR das MRC-Verfahren verwenden kann. Bei diesem Verfahren werden die Rundfunksignale, bzw. aus diesen erzeugte korrespondierende auch Basisbandsignale genannte Zwischenfrequenzsignale, bei denen die Trägerfrequenz des Rundfunksignals aus praktischen Gründen durch eine sogenannte Zwischenfrequenz ersetzt ist, phasentreu und gewichtet aufsummiert, wobei ein Gewichtungsfaktor proportional zu dem SNR des jeweiligen Rundfunksignals gewählt wird. Auf diese Weise sind in dem kombinierten Rundfunksignal Rundfunksignale mit einem größeren SNR stärker enthalten als solche mit niedrigerem SNR, weshalb das kombinierte Rundfunksignal ein größeres SNR aufweist.

Die mit dem MRC-Verfahren theoretisch erreichbaren SNR-Gewinne liegen beispielsweise für 2 Rundfunkantennen bei 3 dB, für 4 Rundfunkantennen bei 6 dB und für 10 Rundfunkantennen bei 10 dB. Dies entspricht einer effektiven Reichweitenvergrößerung des stationären Rundfunksenders jeweils um den Faktor 1,58, 2,0 bzw. 3,15. Entsprechend kann das Rundfunksignal mit 2 Rundfunkantennen theoretisch noch in einer gut eineinhalbfachen Reichweite, mit 4 Rundfunkantennen in einer doppelten Reichweite und mit 10 Rundfunkantennen in einer gut dreifachen Reichweite des stationären Rundfunksenders empfangen werden.

Allerdings setzen die genannten theoretischen SNR-Gewinne bzw. theoretischen effektiven Reichweitenvergrößerungen voraus, dass die von den Rundfunkantennen jeweils empfangenen Rundfunksignale unkorreliert sind. Eine Mehrzahl von in einem Fahrzeug verbauten Rundfunkantennen lässt aber wegen der relativ geringen räumlichen Ausdehnung des Fahrzeugs keine großen Abstände zwischen den Rundfunkantennen zu. Dies hat zur Folge, dass die mit den Rundfunkantennen jeweils empfangenen Rundfunksignale relativ stark korreliert sind, so dass der erreichbare SNR-Gewinn deutlich unterhalb des theoretischen SNR-Gewinns liegt.

Ein Ausweg aus der relativ geringen räumlichen Ausdehnung jedes einzelnen mobilen Geräts mit einer Rundfunkempfangsvorrichtung liegt darin, eine Mehrzahl von mobilen Geräten zu koppeln und auf diese Weise aus Rundfunkantennen der mobilen Geräte einen großräumigen Antennenverbund zu bilden. Die Rundfunkantennen der mobilen Geräte sind im Allgemeinen in einem relativ großen Abstand zueinander angeordnet, wodurch die jeweils empfangenen Rundfunksignale im Wesentlichen unkorreliert sind. Durch einen solchen Antennenverbund lässt sich ein SNR-Gewinn im Wesentlichen in theoretischer Größe erreichen. Dies gilt allgemein für jede Empfangsanordnung mit einem Funksender und mehreren den Funksender empfangenden zueinander beabstandeten Geräten mit einer zu dem Funksender korrespondierenden Funkempfangsvorrichtung.

So offenbart die EP 1 873 929 A1 eine Empfangsanordnung für ein Mobilfunknetz, welches eine Basisstation des Mobilfunknetzes und zumindest zwei mobile Endgeräte umfasst, welche jeweils eine Mobilfunkantenne umfassen und über Mobilfunksignale mit der Basisstation verbunden sind. In der Empfangsanordnung werden Daten zwischen der Basisstation und einem ersten mobilen Endgerät teilweise unmittelbar und teilweise mittelbar über ein zweites mobiles Endgerät übertragen. Auf diese Weise bilden die zumindest zwei Mobilfunkantennen der mobilen Endgeräte einen Antennenverbund, welcher eine Raumdiversität des Mobilfunksignals nutzen kann.

Dagegen offenbart die US 8,170,471 B2 eine Empfangsanordnung mit einer Mehrzahl von miteinander kommunizierenden Fahrzeugen und an Straßenrändern angeordneten stationären Kommunikationseinheiten, welche jeweils eine Antenne aufweisen und miteinander über Funksignale verbunden sind. In der Empfangsanordnung werden Daten zwischen einem ersten Fahrzeug und einem zweiten Fahrzeug mittelbar über zumindest ein weiteres Fahrzeug und/oder eine stationäre Kommunikationseinheit übertragen. Auf diese Weise wirken an der Datenübertragung beteiligte weitere Fahrzeuge und/oder stationäre Kommunikationseinheiten als Repeater und können mehrere alternative Übertragungswege zwischen dem ersten Fahrzeug und dem zweiten Fahrzeug bereitstellen. Auf diese Weise wird eine Raumdiversität der Funksignale genutzt, um eine Reichweite der Fahrzeug-Fahrzeug (C2C)-Kommunikation zu vergrößern.

Eine weitere Empfangsanordnung ist in der WO 2016/054801 A1 beschrieben. Die Empfangsanordnung umfasst einen geostationären Satelliten und eine Mehrzahl von Fahrzeugen, welche jeweils eine Satellitenempfangsvorrichtung, eine an die Satellitenempfangsvorrichtung angeschlossene Satellitenantenne und eine WLAN-Antenne aufweisen und jeweils ein von dem Satelliten abgestrahltes Satellitensignal empfangen sowie mit weiteren Fahrzeugen in einem drahtlosen Ad-Hoc-Netzwerk verbunden sind. Das Satellitensignal umfasst Multimediadaten wie Satellitenfernsehdaten als Nutzsignal. Die Satellitensignale werden über das Ad-Hoc-Netzwerk zu einem der mehreren Fahrzeuge übertragen. Dieses Fahrzeug erzeugt aus den empfangenen Satellitensignalen ein kombiniertes Satellitensignal und daraus das Nutzsignal und überträgt das erzeugte Nutzsignal zu den weiteren Fahrzeugen. Auf diese Weise wird unter Nutzung einer Raumdiversität des Satellitensignals ein SNR-Gewinn insgesamt und eine Qualitätssteigerung des Nutzsignals für jedes beteiligte Fahrzeug erreicht.

Diese Empfangsanordnung weist allerdings das Problem auf, dass die in dem Ad-Hoc-Netzwerk verbundenen Fahrzeuge kein Nutzsignal mehr empfangen, wenn das das Nutzsignal erzeugende und übertragende Fahrzeug das Ad-Hoc-Netzwerk verlässt.

Der Erfindung liegt daher die Aufgabe zugrunde, ein verbessertes Rundfunkempfangssystem für ein Fahrzeug zur Verfügung zu stellen, welches die vorstehenden Nachteile vermeidet. Darüber hinaus ist es Aufgabe der Erfindung, ein Fahrzeug und ein Verfahren zum Empfangen eines Rundfunksignals eines stationären Rundfunksenders anzugeben.

Ein Gegenstand der vorliegenden Erfindung ist ein Rundfunkempfangssystem für ein Fahrzeug. Das Rundfunkempfangssystem umfasst eine erste Signalverarbeitungseinheit, welche ein MRC (Maximum Ratio Combining)-Modul zum Kombinieren einer Mehrzahl von synchronisierten analogen Zwischenfrequenzsignalen zu einem kombinierten analogen Zwischenfrequenzsignal und einen Demodulator zum Extrahieren eines Nutzsignals aus dem kombinierten analogen Zwischenfrequenzsignal umfasst. Die Zwischenfrequenzsignale korrespondieren jeweils zu einem Rundfunksignal derart, dass bei einem identischen Nutzsignal aus praktischen Gründen die Trägerfrequenz des Rundfunksignals durch eine von der Trägerfrequenz verschiedene sogenannte Zwischenfrequenz ersetzt ist. Bei dem Nutzsignal kann es sich beispielsweise um einen Audiostrom eines Radioangebots oder einen Videostrom eines Fernsehangebots handeln.

Die Rundfunkempfangsvorrichtung könnte verwendet werden, um eine Mehrzahl von in einem Fahrzeug verbauten Rundfunkantennen anzuschließen. Allerdings ließe sich aufgrund der relativ starken Korrelation der mit den mehreren Rundfunkantennen empfangenen Rundfunksignale lediglich ein SNR-Gewinn erreichen, welcher deutlich unterhalb eines theoretisch erreichbaren Werts liegt.

Erfindungsgemäß umfasst die erste Signalverarbeitungseinheit einen Zwischenspeicher für eine Mehrzahl von synchronisierbaren digitalisierten Zwischenfrequenzsignalen und eine Mehrzahl von D/A-Wandlern zum Erzeugen eines analogen Zwischenfrequenzsignals aus jedem in dem Zwischenspeicher gespeicherten digitalisierten Zwischenfrequenzsignal. Der Zwischenspeicher bildet einen Puffer für die mehreren digitalisierten Zwischenfrequenzsignale. Auf diese Weise kann eine Mehrzahl von digitalisierten Zwischenfrequenzsignalen zum Erzeugen des Nutzsignals verwendet werden.

Bevorzugt umfasst die Signalverarbeitungseinheit einen auf dem Zwischenspeicher operierenden und jeden D/A-Wandler ausführenden Prozessor, d. h. die D/A-Wandler können als Instanzen eines Softwaremoduls vorgesehen sein, welche von dem Prozessor ausgeführt und auf die digitalisierten Zwischenfrequenzsignale angewendet werden. Selbstverständlich kann die Zahl der Instanzen des Softwaremoduls durch entsprechendes Erzeugen bzw. Vernichten von Instanzen stets an die Zahl der aktuell zu verarbeitenden digitalisierten Zwischenfrequenzsignale angepasst werden.

Die digitalisierten Zwischenfrequenzsignale können dabei von unterschiedlichen Quellen bereitgestellt werden. Insbesondere müssen die unterschiedlichen Quellen nicht zwingend in dem Fahrzeug angeordnet sein, in dem die Rundfunkempfangsvorrichtung verbaut ist. Die digitalisierten Zwischenfrequenzsignale schaffen mit anderen Worten eine Quellenunabhängigkeit der Rundfunkempfangsvorrichtung.

In einer bevorzugten Ausführungsform umfasst die Rundfunkempfangsvorrichtung eine zweite Signalverarbeitungseinheit, welche der ersten Signalverarbeitungseinheit vorgeschaltet und konfiguriert ist, aus einem Rundfunksignal eines stationären Rundfunksenders ein digitalisiertes Zwischenfrequenzsignal zu erzeugen. Die zweite Signalverarbeitungseinheit kann einen Filter, einen an den Filter angeschlossenen Verstärker (Low Noise Amplifier, LNA), einen an den Verstärker angeschlossenen Mischer und einen mit dem Mischer verbundenen Zwischenfrequenzoszillator umfassen, um aus dem empfangenen Rundfunksignal ein zu dem Rundfunksignal korrespondierendes analoges Zwischenfrequenzsignal zu erzeugen. Ferner umfasst die zweite Signalverarbeitungseinheit einen A/D-Wandler, der ausgebildet ist, das analoge Zwischenfrequenzsignal in ein digitalisiertes Zwischenfrequenzsignal umzuwandeln, welches der ersten Signalverarbeitungseinheit zugeführt werden kann.

Das Rundfunkempfangssystem umfasst ferner eine Rundfunkantenne zum Empfangen eines Rundfunksignals eines stationären Rundfunksenders, ein C2C (Car-to-Car)-Modul zum Kommunizieren mit weiteren Fahrzeugen und eine an das C2C-Modul anschließbare oder angeschlossene WLAN-Antenne. Das Rundfunkempfangssystem ist also zum Empfangen eines Rundfunksignals einerseits als auch zum drahtlosen Kommunizieren mit weiteren Fahrzeugen andererseits ausgebildet. Auf diese Weise sind dem Rundfunkempfangssystem neben einem von der Rundfunkantenne empfangenen Rundfunksignal auch von weiteren Fahrzeugen empfangene Rundfunksignale über die WLAN-Antenne zugänglich. Der für C2C-Verbindungen vorgesehene WLAN-p-Standard (IEEE 802.11p) sieht den Austausch von Infotainment-Nutzdaten zwischen Fahrzeugen explizit vor. Erfindungsgemäß sind an die Rundfunkempfangsvorrichtung die Rundfunkantenne und das C2C-Modul anschließbar oder angeschlossen. Die erste Signalverarbeitungseinheit der erfindungsgemäßen Rundfunkempfangsvorrichtung ist konfiguriert, aus einem von der zweiten Signalverarbeitungseinheit erzeugten digitalisierten Zwischenfrequenzsignal und mehreren von weiteren Fahrzeugen über die WLAN-Antenne empfangenen digitalisierten Zwischenfrequenzsignalen ein optimiertes Nutzsignal zu erzeugen.

Ein weiterer Gegenstand der vorliegenden Erfindung ist ein Fahrzeug, mit einer erfindungsgemäßen Rundfunkempfangsvorrichtung oder mit einem erfindungsgemäßen Rundfunkempfangssystem. Das derart ausgestattete Fahrzeug bietet durch die Verwendung mehrerer digitalisierter Zwischenfrequenzsignale zum Erzeugen des Nutzsignals eine weitgehend störungsfreie Nutzung eines Rundfunksignals eines stationären Rundfunksenders. Mit anderen Worten ist ein Radio- oder Fernsehprogramm von einem Rauschen oder Aussetzern überwiegend oder vollständig befreit, wodurch die Zufriedenheit eines Insassen des Fahrzeugs bei der Nutzung des Radio- oder Fernsehprogramms erhöht ist.

In einer bevorzugten Ausführungsform ist das Fahrzeug konfiguriert, das aus einem Rundfunksignal eines stationären Rundfunksenders erzeugte digitalisierte Zwischenfrequenzsignal an zumindest ein weiteres Fahrzeug über die WLAN-Antenne zu senden und/oder ein digitalisiertes Zwischenfrequenzsignal von zumindest einem weiteren Fahrzeug über die WLAN-Antenne zu empfangen. Diese Fähigkeit erlaubt ein Austauschen digitalisierter Zwischenfrequenzsignale innerhalb einer Mehrzahl von Fahrzeugen, wodurch die Rundfunkantennen der Fahrzeuge einen großräumigen Antennenverbund bilden, welcher ein Empfangen nahezu unkorrelierter Rundfunksignale erlaubt. Entsprechend lässt sich mit dem Fahrzeug im Zusammenwirken mit weiteren Fahrzeugen ein SNR-Gewinn in im Wesentlichen theoretischer Größe erreichen.

Gegenstand der vorliegenden Erfindung ist ferner ein Verfahren zum Empfangen eines Rundfunksignals eines stationären Rundfunksenders, bei dem eine Rundfunkempfangsvorrichtung eines Fahrzeugs über eine Rundfunkantenne ein Rundfunksignal eines stationären Rundfunksenders empfängt, eine erste Signalverarbeitungseinheit der Rundfunkempfangsvorrichtung aus dem Rundfunksignal ein analoges Zwischenfrequenzsignal erzeugt, ein MRC-Modul der Rundfunkempfangsvorrichtung aus einer Mehrzahl von synchronisierten analogen Zwischenfrequenzsignalen ein kombiniertes analoges Zwischenfrequenzsignal erzeugt und ein Demodulator der Rundfunkempfangsvorrichtung aus dem kombinierten analogen Zwischenfrequenzsignal ein Audio-Nideosignal extrahiert. Dieses Verfahren kann in Fahrzeugen mit einer Mehrzahl von Rundfunkantennen ausgeführt werden, wobei allerdings wegen der starken Korrelation der jeweils empfangenen Rundfunksignale ein SNR-Gewinn deutlich unterhalb eines theoretischen Werts liegt.

Erfindungsgemäß erzeugt die erste Signalverarbeitungseinheit aus dem analogen Zwischenfrequenzsignal ein erstes digitalisiertes Zwischenfrequenzsignal, empfängt die Rundfunkempfangsvorrichtung über eine WLAN-Antenne und ein C2C-Modul zumindest ein zu dem ersten digitalisierten Zwischenfrequenzsignal sychronisierbares weiteres digitalisiertes Zwischenfrequenzsignal von einem weiteren Fahrzeug, synchronisiert die Rundfunkempfangsvorrichtung die zumindest zwei digitalisierten Zwischenfrequenzsignale und erzeugt ein D/A-Wandler der Rundfunkempfangsvorrichtung aus den zumindest zwei digitalisierten Zwischenfrequenzsignalen die Mehrzahl von analogen Zwischenfrequenzsignalen. Mehrere digitalisierte Zwischenfrequenzsignale werden mittels des D/A-Wandlers jeweils in ein analoges Zwischenfrequenzsignal gewandelt. Auf diese Weise können die Zwischenfrequenzsignale mittels eines herkömmlichen MRC-Moduls kombiniert werden.

In einer vorteilhaften Ausführungsform werden die zumindest zwei digitalisierten Zwischenfrequenzsignale in einem Zwischenspeicher der Rundfunkempfangsvorrichtung gespeichert. Mit anderen Worten werden mehrere digitalisierte Zwischenfrequenzsignale in dem Zwischenspeicher gepuffert, wodurch ein Synchronisieren der digitalisierten Zwischenfrequenzsignale ermöglicht wird.

In einer bevorzugten Ausführungsform wird jedem digitalisierten Zwischenfrequenzsignal ein Zeitstempel zugeordnet und werden die zumindest zwei digitalisierten Zwischenfrequenzsignale vor dem Kombinieren anhand der jeweils zugeordneten Zeitstempel synchronisiert. Dank der Synchronisierung der Zwischenfrequenzsignale werden relative Zeit- und/oder Phasenverschiebungen der digitalisierten Zwischenfrequenzsignale vermieden, wodurch eine Qualität des extrahierten Nutzsignals weiter erhöht ist.

In besonders bevorzugten Ausführungsformen wird das Verfahren von einer Mehrzahl von innerhalb einer WLAN-Reichweite benachbart zueinander angeordneten und/oder eine Kolonne bildenden Fahrzeugen durchgeführt. Je mehr Fahrzeuge zusammenwirken, um das erfindungsgemäße Verfahren auszuführen, desto größer ist der erreichte SNR-Gewinn und entsprechend eine Qualität des Nutzsignals.

Ein wesentlicher Vorteil der erfindungsgemäßen Rundfunkempfangsvorrichtung besteht darin, dass sie im Wesentlichen einen theoretischen SNR-Gewinn erreicht und damit eine hohe Qualität des Nutzsignals gewährleistet. Das mit der Rundfunkempfangsvorrichtung ausführbare Verfahren ist überdies dezentral organisiert, d. h. das Nutzsignal hoher Qualität wird in jedem von mehreren mittels WLAN miteinander verbundenen Fahrzeugen auf dieselbe Weise aus sämtlichen jeweils verfügbaren digitalisierten Zwischenfrequenzsignalen erzeugt, so dass eine Veränderung des Verbunds infolge eines Beitretens oder Ausscheidens eines Fahrzeugs unproblematisch ist.

Die Erfindung ist anhand von Ausführungsformen in den Zeichnungen schematisch dargestellt und wird unter Bezugnahme auf die Zeichnungen weiter beschrieben. Es zeigt:
- Figur 1: in einer schematischen Darstellung ein Blockschaltbild eines Rundfunkempfangssystems gemäß einer erfindungsgemäßen Ausführungsform;
- Figur 2: in einer schematischen Darstellung eine Rundfunkempfangsanordnung mit einem stationären Rundfunksender und zwei Fahrzeugen mit jeweils dem in Figur 1 gezeigten Rundfunkempfangssystem.

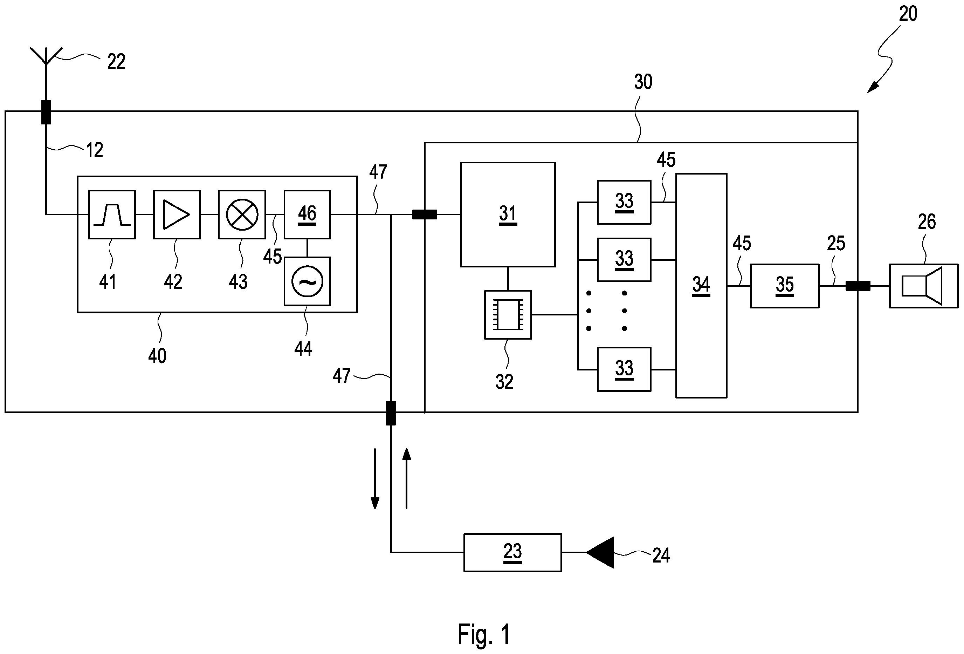

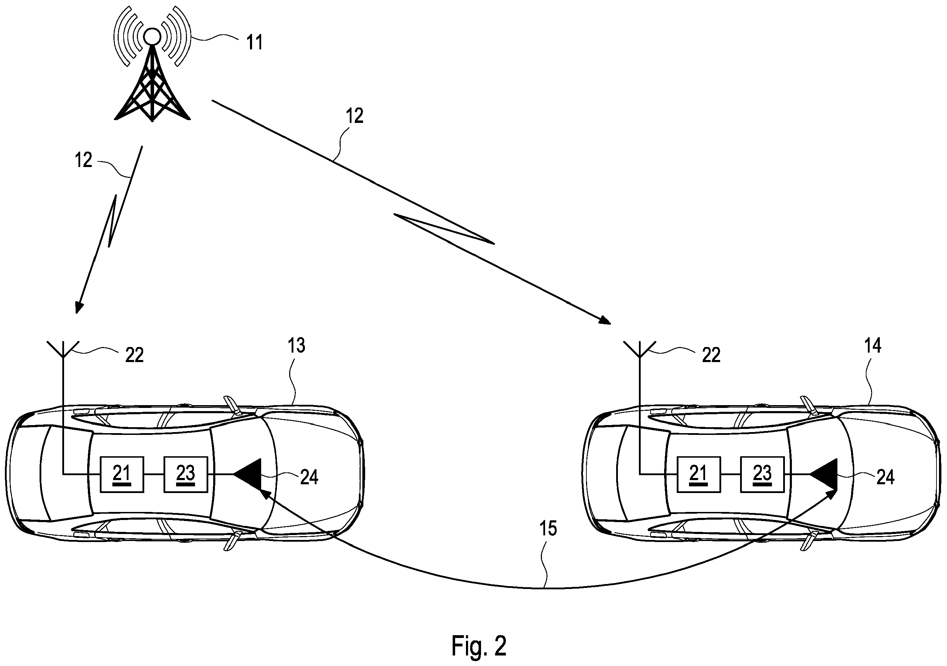

Figur 1 zeigt in einer schematischen Darstellung ein Blockschaltbild eines Rundfunkempfangssystems 20 für ein Fahrzeug 13, 14 (s. Figur 2) gemäß einer erfindungsgemäßen Ausführungsform. Das Rundfunkempfangssystem 20 umfasst eine Rundfunkantenne 22 zum Empfangen eines Rundfunksignals 12 eines stationären Rundfunksenders 11 (s. Figur 2), einem C2C-Modul 23 zum Kommunizieren mit weiteren Fahrzeugen 13, 14, einer an das C2C-Modul 23 angeschlossenen WLAN-Antenne 24.

Ferner umfasst das Rundfunkempfangssystem 20 eine Rundfunkempfangsvorrichtung 21 für ein Fahrzeug 13, 14, an welche die Rundfunkantenne 22 und das C2C-Modul 23 sowie eine Audio-/Videoeinheit 26 zum Ausgeben eines Radio-/Fernsehprogramms angeschlossen sind. Die Rundfunkempfangsvorrichtung 21 ist konfiguriert, ein aus einem empfangenen Rundfunksignal 12 des stationären Rundfunksenders 11 erzeugtes digitalisiertes Zwischenfrequenzsignal 47 über das C2C-Modul 23 und die WLAN-Antenne 24 zu senden und/oder zu empfangen.

Die Rundfunkempfangsvorrichtung 21 umfasst eine erste Signalverarbeitungseinheit 30. Die erste Signalverarbeitungseinheit 30 umfasst ein MRC (Maximum Ration Combining)-Modul 34 zum Kombinieren einer Mehrzahl von synchronisierten analogen Zwischenfrequenzsignalen 45 zu einem kombinierten analogen Zwischenfrequenzsignal 45 und einen Demodulator 35 zum Extrahieren eines Nutzsignals 25 aus dem kombinierten analogen Zwischenfrequenzsignal 45. Das Nutzsignal 25 kann beispielsweise einen Audiostrom eines Radioprogramms oder einen Videostrom eines Fernsehprogramms aufweisen.

Ferner umfasst die erste Signalverarbeitungseinheit einen Zwischenspeicher 31 für eine Mehrzahl von synchronisierbaren digitalisierten Zwischenfrequenzsignalen 47 und eine Mehrzahl von D/A-Wandlern 33 zum Erzeugen eines analogen Zwischenfrequenzsignals 45 aus jedem in dem Zwischenspeicher 31 gespeicherten digitalisierten Zwischenfrequenzsignal 47 sowie einen Prozessor 32, welcher auf dem Zwischenspeicher 31 operiert und die mehreren als Instanzen eines Softwaremoduls ausgebildeten D/A-Wandler 33 ausführt. Alternativ können die mehreren D/A-Wandler 33 auch als eine festgelegte Anzahl von Hardware-Modulen ausgebildet sein.

Die Rundfunkempfangsvorrichtung 21 umfasst zudem eine zweite Signalverarbeitungseinheit 40, welche der ersten Signalverarbeitungseinheit 30 vorgeschaltet ist. Die zweite Signalverarbeitungseinheit 40 umfasst einen Filter 41, einen an den Filter 41 angeschlossenen Verstärker (Low Noise Amplifier, LNA) 42, einen an den Verstärker 42 angeschlossenen Mischer 43 und einen mit dem Mischer 43 verbundenen Zwischenfrequenzoszillator 44 ist konfiguriert, aus einem Rundfunksignal 12 eines stationären Rundfunksenders 11 zunächst ein analoges Zwischenfrequenzsignal 45 und dann ein digitalisiertes Zwischenfrequenzsignal 47 zu erzeugen.

Figur 2 zeigt in einer schematischen Darstellung eine Rundfunkempfangsanordnung 10 mit einem ein Rundfunksignal 12 abstrahlenden stationären Rundfunksender 11 und zwei Fahrzeugen 13, 14, in welchen jeweils das in Figur 1 gezeigte Rundfunkempfangssystem 20 verbaut ist. Die beiden Fahrzeuge 13, 14 sind innerhalb einer WLAN-Reichweite benachbart zueinander angeordnet und bilden eine Kolonne. Jedes Fahrzeug 13, 14 ist konfiguriert, das mittels der zweiten Signalverarbeitungseinheit 40 aus dem Rundfunksignal 12 des stationären Rundfunksenders 11 erzeugte digitalisierte Zwischenfrequenzsignal 47 an das jeweils andere Fahrzeug 14, 13 über das C2C-Modul 23 und die WLAN-Antenne 24 als ein WLAN-Signal 15 zu senden und ein digitalisiertes Zwischenfrequenzsignal 47 von dem jeweils anderen Fahrzeug 14, 13 als ein WLAN-Signal 15 über die WLAN-Antenne 24 und das C2C-Modul 23 zu empfangen.

Während des Betriebs der Rundfunkempfangsanordnung 10 empfangen die Rundfunkempfangsvorrichtungen 21 der beiden Fahrzeuge 13, 14 über die Rundfunkantenne 22 jeweils das Rundfunksignal 12 des stationären Rundfunksenders 11. Dabei erzeugt die erste Signalverarbeitungseinheit 30 aus dem Rundfunksignal 12 zunächst ein analoges Zwischenfrequenzsignal 45 und dann aus dem analogen Zwischenfrequenzsignal 45 ein erstes digitalisiertes Zwischenfrequenzsignal 47. Daneben empfängt jede Rundfunkempfangsvorrichtung 21 über die WLAN-Antenne 24 und das C2C-Modul 23 ein zu dem ersten digitalisierten Zwischenfrequenzsignal 47 sychronisierbares zweites digitalisiertes Zwischenfrequenzsignal 47 als ein WLAN-Signal 15 von dem jeweils anderen Fahrzeug 14, 13.

Die beiden digitalisierten Zwischenfrequenzsignale 47 werden für die Dauer der Verarbeitung in einem als Puffer dienenden Zwischenspeicher 31 der Rundfunkempfangsvorrichtung 21 gespeichert. Jedem digitalisierten Zwischenfrequenzsignal 47 wird dazu ein Zeitstempel zugeordnet, und die beiden digitalisierten Zwischenfrequenzsignale 47 werden anhand der jeweils zugeordneten Zeitstempel synchronisiert. Zwei D/A-Wandler 33 erzeugen aus den beiden digitalisierten Zwischenfrequenzsignalen 47 jeweils ein analoges Zwischenfrequenzsignal 45. Das MRC-Modul 34 der jeweiligen Rundfunkempfangsvorrichtung 21 erzeugt dann aus den beiden synchronisierten analogen Zwischenfrequenzsignalen 45 ein kombiniertes analoges Zwischenfrequenzsignal 45. Der Demodulator 35 der jeweiligen Rundfunkempfangsvorrichtung 21 extrahiert aus dem kombinierten analogen Zwischenfrequenzsignal 45 das Nutzsignal 25, welches schließlich von der Audio-/Videoeinheit 26, beispielsweise als ein Radioprogramm oder als ein Fernsehprogramm, für einen Insassen des Fahrzeugs 13, 14 in bekannter Weise akustisch und/oder visuell wahrnehmbar ausgegeben wird.

Die gezeigte Rundfunkempfangsanordnung 10 ist beispielhaft mit lediglich zwei Fahrzeugen 13, 14 beschrieben und kann vorteilhaft weitere Fahrzeuge umfassen, um einen größeren SNR-Gewinn zu erreichen.

### BEZUGSZEICHENLISTE:

- 10: Rundfunkempfangsanordnung
- 11: stationärer Rundfunksender
- 12: Rundfunksignal
- 13: Fahrzeug
- 14: Fahrzeug
- 15: WLAN-Signal
- 20: Rundfunkempfangssystem
- 21: Rundfunkempfangsvorrichtung
- 22: Rundfunkantenne
- 23: C2C-Modul
- 24: WLAN-Antenne
- 25: Nutzsignal
- 26: Audio-/Videoeinheit
- 30: erste Signalverarbeitungseinheit
- 31: Zwischenspeicher
- 32: Prozessor
- 33: D/A-Wandler
- 34: MRC-Modul
- 35: Demodulator
- 40: zweite Signalverarbeitungseinheit
- 41: Filter
- 42: Verstärker
- 43: Mischer
- 44: Zwischenfrequenzoszillator
- 45: analoges Zwischenfrequenzsignal
- 46: A/D-Wandler
- 47: digitalisiertes Zwischenfrequenzsignal

## Patentansprüche

1. Rundfunkempfangssystem (20) für ein Fahrzeug (13, 14), mit einer Rundfunkantenne (22) zum Empfangen eines Rundfunksignals (12) eines stationären Rundfunksenders (11), einem C2C-Modul (23) zum Kommunizieren mit weiteren Fahrzeugen (13, 14), einer an das C2C-Modul (23) anschließbaren oder angeschlossenen WLAN-Antenne (24) und mit einer Rundfunkempfangsvorrichtung (21), an welche die Rundfunkantenne (22) und das C2C-Modul (23) anschließbar oder angeschlossen sind und welche eine erste Signalverarbeitungseinheit (30) umfasst, welche ein MRC-Modul (34) zum Kombinieren einer Mehrzahl von synchronisierten analogen Zwischenfrequenzsignalen (45) zu einem kombinierten analogen Zwischenfrequenzsignal (45), einen Demodulator (35) zum Extrahieren eines Nutzsignals (25) aus dem kombinierten analogen Zwischenfrequenzsignal (45), einen Zwischenspeicher (31) für eine Mehrzahl von synchronisierbaren digitalisierten Zwischenfrequenzsignalen (47) und eine Mehrzahl von D/A-Wandlern (33) zum Erzeugen eines analogen Zwischenfrequenzsignals (45) aus jedem in dem Zwischenspeicher (31) gespeicherten digitalisierten Zwischenfrequenzsignal (47) umfasst, wobei das Rundfunkempfangssystem konfiguriert ist, ein aus einem empfangenen Rundfunksignal (12) des stationären Rundfunksenders (11) erzeugtes digitalisiertes Zwischenfrequenzsignal (47) über das C2C-Modul (23) und die WLAN-Antenne (24) zu senden und/oder zu empfangen.

2. Rundfunkempfangssystem nach Anspruch 1, bei dem die Rundfunkempfangsvorrichtung (21) eine zweite Signalverarbeitungseinheit (40) umfasst, welche der ersten Signalverarbeitungseinheit (30) vorgeschaltet und konfiguriert ist, aus einem Rundfunksignal (12) eines stationären Rundfunksenders (11) ein digitalisiertes Zwischenfrequenzsignal (47) zu erzeugen.

3. Fahrzeug (13, 14), mit einem Rundfunkempfangssystem (20) nach einem der Ansprüche 1 oder 2.

4. Fahrzeug nach Anspruch 3, welches konfiguriert ist, das aus einem Rundfunksignal (12) eines stationären Rundfunksenders (11) erzeugte digitalisierte Zwischenfrequenzsignal (47) an zumindest ein weiteres Fahrzeug (14, 13) über die WLAN-Antenne (24) zu senden und/oder ein digitalisiertes Zwischenfrequenzsignal (47) von zumindest einem weiteren Fahrzeug (14, 13) über die WLAN-Antenne (24) zu empfangen.

5. Verfahren zum Empfangen eines Rundfunksignals (12) eines stationären Rundfunksenders (11), bei dem eine Rundfunkempfangsvorrichtung (21) eines Fahrzeugs (13, 14) über eine Rundfunkantenne (22) ein Rundfunksignal (12) eines stationären Rundfunksenders (11) empfängt, eine erste Signalverarbeitungseinheit (30) der Rundfunkempfangsvorrichtung (21) aus dem Rundfunksignal (12) ein analoges Zwischenfrequenzsignal (45) erzeugt, ein MRC-Modul (34) der Rundfunkempfangsvorrichtung (21) aus einer Mehrzahl von synchronisierten analogen Zwischenfrequenzsignalen (45) ein kombiniertes analoges Zwischenfrequenzsignal (45) erzeugt und ein Demodulator (35) der Rundfunkempfangsvorrichtung (21) aus dem kombinierten analogen Zwischenfrequenzsignal (45) ein Audio-/Videosignal (25) extrahiert und bei dem die erste Signalverarbeitungseinheit (30) aus dem analogen Zwischenfrequenzsignal (45) ein erstes digitalisiertes Zwischenfrequenzsignal (47) erzeugt, die Rundfunkempfangsvorrichtung (21) über eine WLAN-Antenne (24) und ein C2C-Modul (23) zumindest ein zu dem ersten digitalisierten Zwischenfrequenzsignal (47) sychronisierbares weiteres digitalisiertes Zwischenfrequenzsignal (47) von einem weiteren Fahrzeug (14, 13) empfängt, die zumindest zwei digitalisierten Zwischenfrequenzsignale (47) synchronisiert und ein D/A-Wandler (33) der Rundfunkempfangsvorrichtung (21) aus den zumindest zwei digitalisierten Zwischenfrequenzsignalen (47) die Mehrzahl von analogen Zwischenfrequenzsignalen (45) erzeugt.

6. Verfahren nach Anspruch 5, bei dem die zumindest zwei digitalisierten Zwischenfrequenzsignale (47) in einem Zwischenspeicher (31) der Rundfunkempfangsvorrichtung (21) gespeichert werden.

7. Verfahren nach einem der Ansprüche 5 oder 6, bei dem jedem digitalisierten Zwischenfrequenzsignal (47) ein Zeitstempel zugeordnet wird und die zumindest zwei digitalisierten Zwischenfrequenzsignale (47) vor dem Kombinieren anhand der jeweils zugeordneten Zeitstempel synchronisiert werden.

8. Verfahren nach einem der Ansprüche 5 bis 8, welches von einer Mehrzahl von innerhalb einer WLAN-Reichweite benachbart zueinander angeordneten und/oder eine Kolonne bildenden Fahrzeugen (13, 14) durchgeführt wird.

## Claims

1. Radio receiving system (20) for a vehicle (13, 14), having a radio antenna (22) for receiving a radio signal (12) from a stationary radio transmitter (11), a C2C module (23) for communicating with further vehicles (13, 14), a WLAN antenna (24) which can be connected or is connected to the C2C module (23), and having a radio receiving device (21) to which the radio antenna (22) and the C2C module (23) can be connected or are connected and which comprises a first signal processing unit (30), which comprises an MRC module (34) for combining a plurality of synchronised analogue intermediate frequency signals (45) into one combined analogue intermediate frequency signal (45), a demodulator (35) for extracting a useful signal (25) from the combined analogue intermediate frequency signal (45), a temporary store (31) for a plurality of synchronisable digitised intermediate frequency signals (47) and a plurality of D/A converters (33) for generating an analogue intermediate frequency signal (45) from each digitised intermediate frequency signal (47) stored in the temporary store (31), wherein the radio receiving system is configured to transmit and/or receive a digitised intermediate frequency signal (47) generated from a received radio signal (12) from the stationary radio transmitter (11) via the C2C module (23) and the WLAN antenna (24).

2. Radio receiving system according to claim 1, in which the radio receiving device (21) comprises a second signal processing unit (40) which is connected upstream of the first signal processing unit (30) and is configured to generate a digitised intermediate frequency signal (47) from a radio signal (12) from a stationary radio transmitter (11).

3. Vehicle (13, 14), having a radio receiving system (20) according to any of claims 1 or 2.

4. Vehicle according to claim 3, which is configured to transmit the digitised intermediate frequency signal (47) generated from a radio signal (12) from a stationary radio transmitter (11) to at least one further vehicle (14, 13) via the WLAN antenna (24) and/or to receive a digitised intermediate frequency signal (47) from at least one further vehicle (14, 13) via the WLAN antenna (24).

5. Method for receiving a radio signal (12) from a stationary radio transmitter (11), in which a radio receiving device (21) of a vehicle (13, 14) receives a radio signal (12) from a stationary radio transmitter (11) via a radio antenna (22), a first signal processing unit (30) of the radio receiving device (21) generates an analogue intermediate frequency signal (45) from the radio signal (12), an MRC module (34) of the radio receiving device (21) generates a combined analogue intermediate frequency signal (45) from a plurality of synchronised analogue intermediate frequency signals (45), and a demodulator (35) of the radio receiving device (21) extracts an audio/video signal (25) from the combined analogue intermediate frequency signal (45), and in which the first signal processing unit (30) generates a first digitised intermediate frequency signal (47) from the analogue intermediate frequency signal (45), the radio receiving device (21) receives at least a further digitised intermediate frequency signal (47), which can be synchronised with the first digitised intermediate frequency signal (47), from a further vehicle (14, 13) via a WLAN antenna (24) and a C2C module (23), synchronises the at least two digitised intermediate frequency signals (47) and a D/A converter (33) of the radio receiving device (21) generates the plurality of analogue intermediate frequency signals (45) from the at least two digitised intermediate frequency signals (47).

6. Method according to claim 5, in which the at least two digitised intermediate frequency signals (47) are stored in a temporary store (31) of the radio receiving device (21).

7. Method according to any of claims 5 or 6, in which a time stamp is associated with each digitised intermediate frequency signal (47) and the at least two digitised intermediate frequency signals (47) are synchronised before being combined on the basis of the respectively associated time stamps.

8. Method according to any of claims 5 to 8, which is carried out by a plurality of vehicles (13, 14) arranged adjacent to one another within a WLAN range and/or forming a column.

## Revendications

1. Système de réception de radiodiffusion (20) pour un véhicule (13, 14), avec une antenne de radiodiffusion (22) pour recevoir un signal de radiodiffusion (12) d'un émetteur de radiodiffusion stationnaire (11), un module C2C (23) pour communiquer avec d'autres véhicules (13, 14), une antenne WLAN (24) pouvant être connectée ou connectée au module C2C (23) et avec un dispositif de réception de radiodiffusion (21), auquel l'antenne de radiodiffusion (22) et le module C2C (23) peuvent être connectés ou sont connectés et lequel comprend une première unité de traitement de signal (30), laquelle comprend un module MRC (34) pour combiner une pluralité de signaux analogiques synchronisés de fréquence intermédiaire (45) en un signal analogique combiné de fréquence intermédiaire (45), un démodulateur (35) pour extraire un signal utile (25) à partir du signal analogique combiné de fréquence intermédiaire (45), une mémoire tampon (31) pour une pluralité de signaux numériques synchronisés de fréquence intermédiaire (47) et une pluralité de convertisseurs A/N (33) pour générer un signal analogique de fréquence intermédiaire (45) à partir de chaque signal numérique de fréquence intermédiaire (47) stocké dans la mémoire tampon (31), dans lequel le système de réception de radiodiffusion est configuré pour émettre et/ou recevoir un signal numérisé de fréquence intermédiaire (47) généré à partir d'un signal de radiodiffusion reçu (12) de l'émetteur de radiodiffusion stationnaire (11) via le module C2C (23) et l'antenne WLAN (24).

2. Système de réception de radiodiffusion selon la revendication 1, dans lequel le dispositif de réception de radiodiffusion (21) comprend une seconde unité de traitement de signal (40), laquelle est connectée en amont de la première unité de traitement de signal (30) et configurée pour générer un signal numérisé de fréquence intermédiaire (47) à partir d'un signal de radiodiffusion (12) d'un émetteur de radiodiffusion stationnaire (11).

3. Véhicule à moteur (13, 14), avec un système de réception de radiodiffusion (20) selon l'une quelconque des revendications 1 ou 2.

4. Véhicule selon la revendication 3, lequel est configuré pour émettre le signal numérisé de fréquence intermédiaire (47) généré par un signal de radiodiffusion (12) d'un émetteur de radiodiffusion stationnaire (11) à au moins un autre véhicule (14, 13) via l'antenne WLAN (24) et/ou pour recevoir un signal numérisé de fréquence intermédiaire (47) d'au moins un autre véhicule (14, 13) via l'antenne WLAN (24).

5. Procédé de réception d'un signal de radiodiffusion (12) d'un émetteur de radiodiffusion stationnaire (11), dans lequel un dispositif de réception de radiodiffusion (21) d'un véhicule (13, 14) reçoit un signal de radiodiffusion (12) d'un émetteur de radiodiffusion stationnaire (11) par l'intermédiaire d'une antenne de radiodiffusion (22), une première unité de traitement de signal (30) du dispositif de réception de radiodiffusion (21) génère un signal analogique de fréquence intermédiaire (45) à partir du signal de radiodiffusion (12), un module MRC (34) du dispositif de réception de radiodiffusion (21) génère un signal analogique combiné de fréquence intermédiaire (45) à partir d'une pluralité de signaux analogiques synchronisés de fréquence intermédiaire (45), et un démodulateur (35) du dispositif de réception de diffusion (21) extrait un signal audio/vidéo (25) du signal analogique combiné de fréquence intermédiaire (45), et dans lequel la première unité de traitement de signal (30) génère un premier signal numérisé de fréquence intermédiaire (47) à partir du signal analogique de fréquence intermédiaire (45), le dispositif de réception de diffusion (21) reçoit au moins un autre signal numérisé de fréquence intermédiaire (47) pouvant être synchronisé avec le premier signal numérisé de fréquence intermédiaire (47) d'un autre véhicule (14, 13) via une antenne WLAN (24) et un module C2C (23), qui synchronise les au moins deux signaux numérisés synchronisés de fréquence intermédiaire (47), et un convertisseur N/A (33) du dispositif de réception de radiodiffusion (21) génère la pluralité de signaux analogiques de fréquence intermédiaire (45) à partir des au moins deux signaux numérisés de fréquence intermédiaire (47).

6. Procédé selon la revendication 5, dans lequel les au moins deux signaux numérisés de fréquence intermédiaire (47) sont stockés dans une mémoire tampon (31) du dispositif de réception de radiodiffusion (21).

7. Procédé selon l'une quelconque des revendications 5 ou 6, dans lequel un horodateur est attribué à chaque signal numérisé de fréquence intermédiaire (47) et les au moins deux signaux numérisés de fréquence intermédiaire (47) sont synchronisés avant d'être combinés sur la base des horodateurs attribués respectifs.

8. Procédé selon l'une quelconque des revendications 5 à 8, lequel est exécuté par une pluralité de véhicules (13, 14) agencés de manière adjacente les uns par rapport aux autres au sein d'une plage WLAN et/ou formant une colonne.
